# EUROPÄISCHE PATENTSCHRIFT

(11) **EP 1 714 762 B1**
(45) Veröffentlichungstag und Bekanntmachung des Hinweises auf die Patenterteilung: **28.11.2012**
(21) Anmeldenummer: 06007970.4
(22) Anmeldetag: 18.04.2006
(51) Int. Cl.: B29B 13/02, B29C 53/04, B29C 53/84, B29C 37/02

(54) **Zonenheizvorrichtung**
Zonal heating apparatus
Dispositif de chauffage par zones

(30) Priorität: 18.04.2005 DE 102005017900
(43) Veröffentlichungstag der Anmeldung: 25.10.2006
(73) Patentinhaber: Hannecke Display Systems GmbH & Co. KG, 37154 Northeim (DE)
(72) Erfinder: Hannecke, Wolf-Dietrich, 37154 Northeim (DE)
(74) Vertreter: Hofstetter, Schurack & Partner

(56) Entgegenhaltungen:
- EP-B1- 1 126 965
- WO-A1-2005/042420
- DD-A1- 238 558
- DE-A1- 4 320 257
- DE-A1- 19 804 265
- DE-C1- 19 629 355
- FR-A- 1 254 671
- GB-A- 636 765
- GB-A- 845 411
- GB-A- 1 475 549
- JP-A- 5 077 078
- JP-A- 6 071 658
- JP-A- 6 134 771
- JP-A- 58 091 041
- JP-B- 48 032 492
- US-A1- 2004 035 524
- US-A1- 2004 135 988

## Beschreibung

Die Erfindung betrifft eine Zonenheizvorrichtung sowie ein Verfahren zum zonalen Wärmeeintrag bei der Herstellung dreidimensionaler Formkörper.

Aus der Praxis ist es bekannt, thermoplastische Materialien zu erwärmen und im erwärmten Zustand zu verformen. Ferner ist es aus der Praxis bekannt, die Oberflächen thermoplastischer Materialien einer Wärmebehandlung zu unterziehen, wobei zu den letzteren Verfahren insbesondere das Flammpolieren gehört.

Aus der EP 1 126 965 B1 sowie aus der DE 298 19 802 U1 ist ferner ein Verfahren zur Herstellung einstückig ausgebildeter, dreidimensionaler Formkörper bekannt, bei welchem ein Wärmeeintrag lediglich entlang von Umformlinien in einem schmalen Erwärmungsbereich erfolgt, wobei das Umformen ohne Anschlagkante, Kerbe oder Gesenk frei im Raum erfolgt, wobei ferner die Krafteinleitung in nicht erwärmten Bereichen erfolgt und die erzielte Raumform nach dem Abkühlen, während dessen der Materialzuschnitt gehalten wird, dauerhaft erhalten bleibt. In der genannten EP 1 126 965 B1 sind dabei auch Zonenheizvorrichtungen beschrieben. Es hat sich allerdings gezeigt, dass die bekannten Vorrichtungen in der Praxis schwer zu handhaben sind.

Aus dem Stand der Technik sind ferner Verfahren und Vorrichtungen zum Folienschweißen bekannt.

So beschreibt die DE 845 564 ein Verfahren und eine Vorrichtung zur Erwärmung thermoplastischer Stoffe, bei welcher die Wärmestrahlen durch optische den Strahlengang beeinflussende Mittel (Sammellinsen und/oder Hohlspiegel rotations- oder zylinderparabolischer oder - elliptischer Form od. dgl.) auf bestimmte Punkte, Linien oder begrenzte Bereiche konzentriert werden. Als Wärmequelle sind ortsfeste Infrarotstrahler vorgesehen denen das zu verschweißende Material zugeführt wird.

Die DE 75 25 922 U1 betrifft eine Vorrichtung zum Schweißen von Kunststoffen, wobei das Verschweißen mit Warmluft erfolgen soll, die mittels einer Gasbeheizung erzeugt wird.

Ein weiteres Verfahren und eine weitere Vorrichtung zum Schweißen von Plastfolien sind in der DE 1 604 687 beschrieben. Diese nutzen einen heißen Gasstrahl, der mittels eines handelsüblichen Heißgasschweißbrenners erzeugt wird. Für den heißen Gasstrahl ist eine Führung von Hand vorgeschlagen, um endliche und unendliche Nähte zu erzeugen.

Eine weitere Vorrichtung zum Verschweißen thermoplastischer Kunststofffolien mittels eines Heißgasstromes ist aus der DE 1 978 803 bekannt. Auch bei dieser Vorrichtung werden die Folien an den Heißgasdüsen vorbeigeführt.

Schließlich ist in der DD 57 068 eine Vorrichtung zur mechanisierten Heißgasschweißung von thermoplastischen Werkstoffen mittels Zusatzwerkstoff beschrieben. Diese Vorrichtung weist einen linear verfahrbaren Wagen auf, an welchem Schweißdüsen angeordnet sind.

Aus der JP 6 071658 A ist eine Entgratvorrichtung mit einem Brenner bekannt, welcher auf einer XYZ-Verfahreinrichtung montiert ist. Durch heißes, aus dem Brenner ausströmendes Gas lassen sich Grate eines Werkstücks wegschmelzen. Hierzu wird der Brenner mittels der XYZ-Verfahreinrichtung über das Werkstück bewegt. Als Brenngas lässt sich hierbei auch ein Wasserstoffsauerstoffgemisch verwenden.

Der Erfindung liegt die Aufgabe zugrunde, eine Vorrichtung sowie ein Verfahren zum zonalen Wärmeeintrag in im wesentlichen ebene Materialzuschnitte zur Verfügung zu stellen, welche bei zu fertigenden dreidimensionalen Formkörpern eine einfache Handhabung ermöglichen.

Die Lösung dieser Aufgabe erfolgt erfindungsgemäß mit einer Zonenheizvorrichtung gemäß den Merkmalen des Anspruchs 1 bzw. einem Verfahren gemäß den Merkmalen des Anspruchs 22.

Gemäß der Erfindung ist bei einer Zonenheizvorrichtung zum zonalen Wärmeeintrag in im wesentlichen ebene Materialzuschnitte bei der Fertigung dreidimensionaler Formkörper mindestens eine erste, im wesentlichen punktförmige Wärmequelle vorgesehen, deren Einwirkstelle mit einer ersten Quelleführung in einer ersten, zu der Wirkrichtung der Wärmequelle im wesentlichen senkrecht angeordneten Ebene in zwei zueinander quer verlaufenden Richtungen verlagerbar ist. Mit dem Begriff der im wesentlichen punktförmigen Wärmequelle sollen solche Wärmequellen bezeichnet sein, die im Gegensatz zu linienförmigen Heizstäben nur eine räumlich sehr begrenzte Einwirkstelle aufweisen. Da gemäß der Erfindung nun diese Einwirkstelle verlagerbar ist, lassen sich praktisch beliebig geformte Zonen und insbesondere gekrümmte Biegelinien erzeugen, welche beispielsweise ein nachfolgendes Falten des Materialzuschnittes ermöglichen. Es ist daher nicht mehr erforderlich, jeweils an die Geometrie der gewünschten zu erwärmenden Zone angepasste Heizelement zu erstellen, sondern die Geometrie ergibt sich durch die Steuerung der Wärmequelle.

Es ist ein erster Gasbrenner vorgesehen. Durch die Verwendung eines Gasbrenners ist es möglich, das Entstehen und damit den Eintrag von Wärme in einen Materialzuschnitt sehr schnell zu verändern, ohne dass dafür aufwendige Vorrichtungen erforderlich wären. Dadurch ist die Handhabung und Steuerung der Zonenheizvorrichtung besonders einfach.

Die Verwendung eines Gasbrenners ermöglicht es darüber hinaus, breite oder fokussierte Wärmeeintragsgeometrien zu realisieren, da die Brennerdüse auswechselbar angeordnet ist. In einer Ausgestaltung der Zonenheizvorrichtung kann die Austrittsachse der Brennerdüse verändert werden.

Auswechselbare Brennerdüsen bzw. verstellbare Düsenachsen gestatten es, auf die Geometrie der erwärmten Zonen gezielt Einfluss zu nehmen. Gleiches gilt für Gasbrenner der Zonenheizvorrichtung, bei denen die Brennerdüse zwei oder mehr Gemischaustrittsöffnungen aufweist.

Als besonders vorteilhaft hat sich die Verwendung eines Wasserstoff-Sauerstoff-Gasgemisches als Brenngas für den Gasbrenner herausgestellt, da der bei der Verbrennung des Wasserstoff-Sauerstoff-Gasgemisches entstehende Wasserdampf sich zunächst der Erwärmungszone benachbart niederschlägt und dort selbst durch Verdampfung eine Kühlung bewirkt, wodurch sich eine räumliche Begrenzung der erwärmten Zonen erreichten lässt. Dementsprechend weist die Zonenheizvorrichtung mindestens einen Gasbrenner auf, der auf ein solches Wasserstoff-Sauerstoff-Gasgemisch hin optimiert ist.

Die Zonenheizvorrichtung weist einen Wasserstoff-Gas-Generator auf. So lässt sich das zum Betrieb der Zonenheizvorrichtung benötigte Wasserstoffgas an Ort und Stelle erzeugen, wodurch die Zonenheizvorrichtung von Gaslieferungen unabhängig ist, das die Logistik beim Betrieb der bevorzugten Ausführungsform der Zonenheizvorrichtung erleichtert.

Vorzugsweise ist neben der ersten im wesentlichen punktförmigen Wärmequelle eine zweite im wesentlichen punktförmige Wärmequelle vorgesehen, deren Einwirkstelle verlagerbar ist. Dadurch ist es möglich, den Wärmeeintrag zu beschleunigen, ohne den Materialzuschnitt punktuell thermisch zu überlasten, und es ist dadurch insbesondere möglich, von einander gegenüber liegenden Seiten eines Materialzuschnittes auf diesen einzuwirken, so dass ein schonender Wärmeeintrag in die Tiefe des Materials möglich ist.

Vorzugsweise sind die erste und/oder die zweite Wärmequelle so gestaltet, dass sie eine von der Eintragsstelle entkoppelte Steuerung der Intensität des Wärmeeintrages ermöglichen. Eine solche Gestaltung erlaubt es, die Zonenheizvorrichtung einfacher zu steuern, denn aufgrund einer solchen entkoppelten Struktur lassen sich Veränderungen an dem ebenen Materialszuschnitt in Folge der Änderungen von Prozessparametern leichter auf den jeweils geänderten Prozessparameter zurückverfolgen, und es ist zudem, wenn gewünscht leichter möglich, den Ort eines Wärmeintrages ohne Änderung der Intensität des Wärmeeintrages zu verlagern, wenn dies aus Gründen der nachfolgenden Bearbeitung, beispielsweise durch Falten, gewünscht sein sollte.

Gemäß einer weiter bevorzugten Ausführungsform ist bei der Zonenheizvorrichtung ein zweiter Gasbrenner vorgesehen. Ein solcher zweiter Gasbrenner, welcher vorzugsweise dem ersten Gasbrenner im Bezug auf die Ebene des Materialszuschnittes, vorzugsweise mit Achsversatz, gegenüberliegend angeordnet ist, ermöglicht einen besonders schonenden Wärmeeintrag, wobei die Wärme dann insbesondere in die Materialtiefe des Materialzuschnittes eindringen kann, ohne seitlich benachbart von einer Erwärmungszone das Material übermäßig zu erwärmen.

Gemäß einer besonders bevorzugten Ausführungsform der Erfindung weisen die Brennerdüsen jeweils mindestens eine Gasaustrittskanüle auf. Durch solche Austrittskanülen, die durch das nachströmende Gas gekühlt werden, kann eine thermische Rückwirkung der heißen Flamme auf die Gaszuleitung verhindert werden. Wenn solche Gasaustrittskanülen darüber hinaus aus einem durch Biegen ausrichtbaren Rohrmaterial bestehen, ist es besonders einfach möglich, auf die Geometrie der Einwirkstelle Einfluss zu nehmen.

Alternativ zu Gasaustrittskanülen kann es vorteilhaft sein, wenn die Brennerdüsen durch Bohrungen in einem Gasleitungsendstopfen gebildet sind. Auch in diesem Falle werden die Gasleitungsendstopfen durch das hindurchströmende Brenngas gekühlt. Es ist ein Vorteil dieser Ausführungsform, dass solche Brennerdüsen gegen mechanische Einwirkungen sehr unempfindlich sind.

Um nach Möglichkeit einen Materialzuschnitt an jeder Stelle bearbeiten zu können, ist bei einer weiter bevorzugten Zonenheizvorrichtung eine erste Brennerführung vorgesehen, mit welcher der erste Brenner in einer ersten, zu der Flammrichtung des ersten Gasbrenners im wesentlichen senkrecht angeordneten Ebene verfahrbar ist. Weiter bevorzugt ist eine zweite Brennerführung vorgesehen, mit welcher der zweite Brenner in einer zweiten, zu der Flammrichtung des zweiten Gasbrenners im wesentlichen senkrecht angeordneten Ebene verfahrbar ist. Diese Brennerführungen ermöglichen ohne großen Steuerungsaufwand das Anfahren jedes Punktes vor dem ebenen Materialzuschnitt, wobei sich in diesem Zusammenhang Portal-Verfahreinrichtungen als besonders vorteilhaft erwiesen haben.

Eine besonders einfache Steuerung ergibt sich, wenn die Wärmequellen derart ausgestaltet sind, dass die Wegkoordinaten der Quellenführungen aus den Koordinaten der gewünschten Einwirkstelle auf dem ebenen Materialzuschnitt ableitbar sind, was insbesondere dann der Fall ist, wenn der Weg, den die Wärmequelle zurücklegt, sich aus einer Projektion der Koordinaten aus der Ebene des Materialzuschnittes in die Ebene der Quellenführungen ergibt.

Bei der Erwärmung ebener Materialzuschnitte kann das Problem auftauchen, daß an den ebenen Materialzuschnitten in Folge der Wärmeeinwirkung Verwerfungen entstehen. Daher ist bei einer bevorzugten Ausführungsform der Erfindung neben einem Abstandssensor, der auch zur Steuerung der Intensität der Wärmequelle genutzt werden kann, eine mit dem Abstandsensor zusammenwirkende Abstandssteuerung vorgesehen, welche unabhängig von der X-Y-Steuerung erfolgt.

Das erfindungsgemäße Verfahren zum zonalen Wärmeeintrag in einen im wesentlichen ebenen Materialzuschnitt aus einem thermoplastischen Material zur Fertigung dreidimensionaler Formkörper zeichnet sich dadurch aus, daß zum Wärmeeintrag eine Verlagerung der Eingriffstelle einer im wesentlichen punktförmigen Wärmequelle in einer ersten, zu der Wirkrichtung der Wärmequelle im wesentlichen senkrecht angeordneten Ebene in zueinander quer verlaufenden Richtungen erfolgt. Die mit diesem erfindungsgemäßen Verfahren verbundenen Vorteile sind bereits im Zusammenhang mit der erfindungsgemäßen Zonenheizvorrichtung, auf die hiermit Bezug genommen wird, erläutert worden.

Gemäß einer besonders bevorzugten Ausführungsform eines erfindungsgemäßen Verfahrens ist vorgesehen, daß eine von der Eintragsstelle entkoppelte Steuerung der Intensität des Wärmeeintrags durch die erste und/oder die zweite Wärmequelle erfolgt.

Ferner ist vorzugsweise vorgesehen, daß die Wärmeerzeugung durch Verbrennen eines Brenngas-Sauerstoff-Gasgemisches erfolgt. Diese Art der Wärmeerzeugung ermöglicht ein gezielt dosiertes bzw. portioniertes Einbringen der Wärmeenergie.

Ein Vorteil des dosierten bzw. portionierten Einbringens der Wärmeenergie ist es, daß solchermaßen erwärmte und anschließend gemäß dem Verfahren nach EP 1 126 965 B1 verformte ehemals ebene Materialzuschnitte in ihren Flächen praktisch spannungsfrei sind, so daß in diesen Flächen eine Spannungsrißbildung praktisch ausgeschlossen ist.

Gemäß besonders bevorzugten Verfahrensvarianten erfolgt die Führung des Gasbrenners mal schneller, mal langsamer, wodurch sich der Wärmeverlauf in dem ebenen Materialzuschnitt ganz gezielt einstellen läßt.

Für eine solch gezielte Einstellung des Wärmeverlaufes ist es gemäß einer weiter bevorzugten Ausführungsform des erfindungsgemäßen Verfahrens vorgesehen, daß der Wärmeeintrag mehrere Heizzyklen umfaßt, bei denen die Brennerdüsen einzelne Bereiche mehrmals überfahren. Einzelne Bereiche erfahren so eine dosierte Erwärmung in mehreren Portionen. In den zwischen den einzelnen Heizzyklen liegenden Pausen kann sich die eingebrachte Energie in dem thermoplastischen Materialzuschnitt gut verteilen, was insbesondere bei an sich schlecht wärmeleitenden ebenen Materialzuschnitten aus einem Kunststoff sich als Vorteil zeigt, wenn bedacht wird, daß ein kontinuierlicher Energiestrom an der Oberfläche zu Schäden führen könnte, ehe in der Tiefe eine Erwärmung überhaupt stattgefunden hat.

Eine Wärmeerzeugung durch Verbrennen eines Brenngas-Sauerstoff-Gasgemisches, bei dem es sich aus den oben genannten Gründen vorzugsweise um ein Wasserstoff-Sauerstoff-Gasgemisch handeln sollte, hat ferner den Vorteil, daß selbst komplizierte Erwärmungsgeometrien ohne großen Steuerungsaufwand realisierbar sind. Es kann beispielsweise auch eine Mäanderbahn mit der Wärmequelle bzw. dem Gasbrenner abgefahren werden.

Bei einer weiter bevorzugten Verfahrensvariante ist vorgesehen, daß die ebenen Materialzuschnitte, bei denen es sich vorzugsweise um ebene Materialzuschnitte aus einem thermoplastischen Kunstoffmaterial wie Polymetylmetakrylat (PMMA, Plexiglas) handelt, in einem vorgeheizten Zustand bearbeitet werden, wobei sich ein Vorheizen auf ca. 80° im Hinblick auf eine Spannungsrißvermeidung als besonders vorteilhaft erwiesen hat. Die Materialschnitte haben vorzugsweise eine Materialstärke von 0,5 mm bis 20,0 mm. Bei einer Verwendung transparenten thermoplastischen Kunststoffmaterials zur Herstellung von Leuchten sind Materialstärken von 3,0 bis 5,0 mm, insbesondere 4,0 mm besonders vorteilhaft.

Bei einer anderen bevorzugten Ausführungsvariante ist ein nachträgliches Tempern vorgesehen, welches alternativ oder ergänzend zu dem Vorheizen anwendbar ist.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1:: eine erste perspektivische Ansicht einer Rahmenkonstruktion einer erfindungsgemäßen Zonenheizvorrichtung gemäß einer bevorzugten Ausführungsform,
- Fig. 2:: eine erste und eine zweite Brennerführung der erfindungsgemäßen Zonenheizvorrichtung in Fig. 1,
- Fig. 3:: die erfindungsgemäße Zonenheizvorrichtung in den Fig. 1 und 2 mit einem darin angeordneten ebenen Materialzuschnitt aus thermoplastischen Material,

- Fig. 4:: eine perspektivische Detailansicht der Gasbrenner der in den Fig. 1 bis 3 gezeigten Zonenheizvorrichtung,
- Fig. 5:: einen perspektivische Prinzipdarstellung zur Verdeutlichung einer besonders bevorzugten Führung eines Gastrenners einer erfindungsgemäßen Zonenheizvorrichtung,
- Fig. 6:: eine Prinzipdarstellung der Abstandssteuerung in der Ebene X-Z in Fig. 1 bei einem unverformten Materialzuschnitt,
- Fig. 7:: eine Prinzipdarstellung der Abstandssteuerung in der Ebene X-Z in Fig. 2 bei einen durch thermische Einwirkung Verwerfungen aufweisenden Materialzuschnitt,
- Fig. 8:: eine Prinzipdarstellung der Wegsteuerung in einer Ansicht entsprechend dem Pfeil VIII in Fig. 5 und
- Fig. 9:: eine perspektivische Prinzipdarstellung zur Verdeutlichung einer besonders bevorzugten Kantenbearbeitung mit einer erfindungsgemäßen Zonenheizvorrichtung.

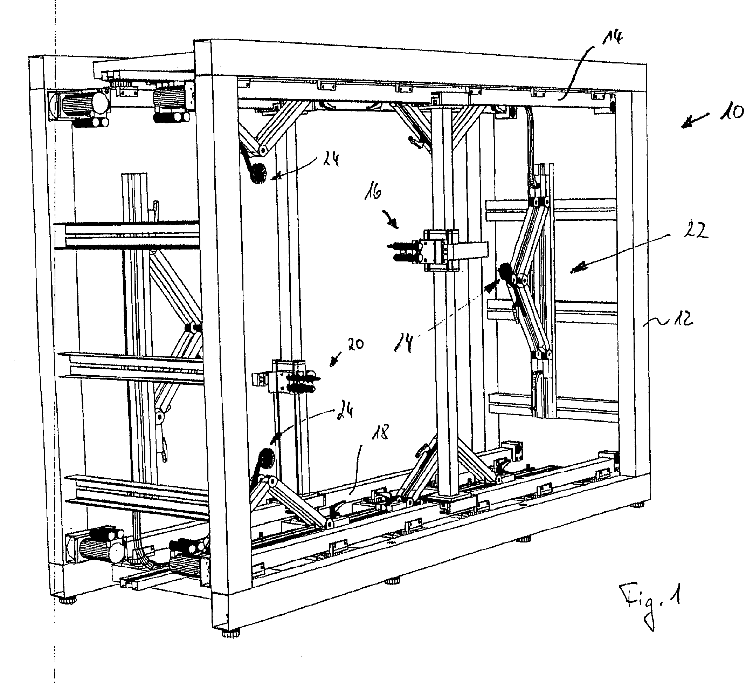

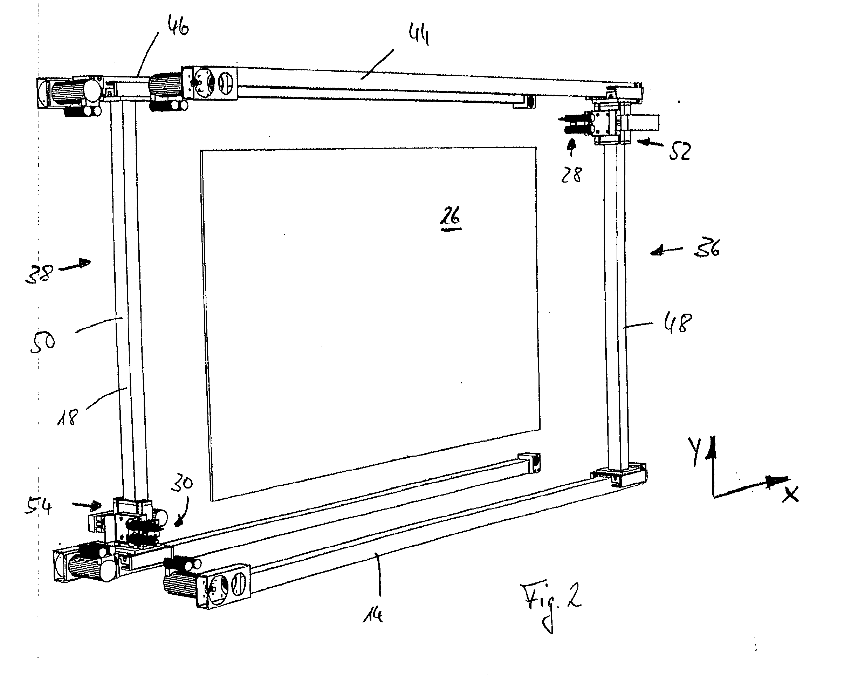

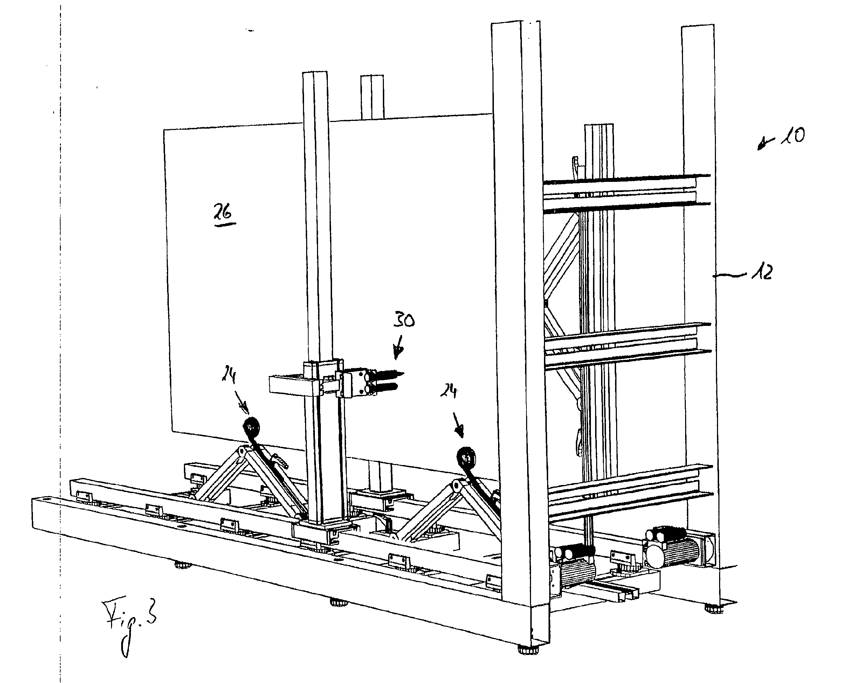

Die in den Fig. 1 bis 9 erläuterte bevorzugte Ausführungsform einer erfindungsgemäßen Zonenheizvorrichtung 10 weist einen Maschinenrahmen 12 auf, an welchem eine erste Führung 14 für eine im wesentlichen punktförmige erste Wärmequelle 16 und eine zweite Führung 18 für eine im wesentlichen punktförmige zweite Wärmequelle 20 gelagert sind. Ferner ist an dem Maschinenrahmen 12 eine Materialzuschnitt-Haltevorrichtung 22 angeordnet, welche mittels Saugnäpfen 24 ebene Materialzuschnitte 26 in einer Ebene halten kann, welche sich im wesentlichen senkrecht zur Horizontalen erstreckt.

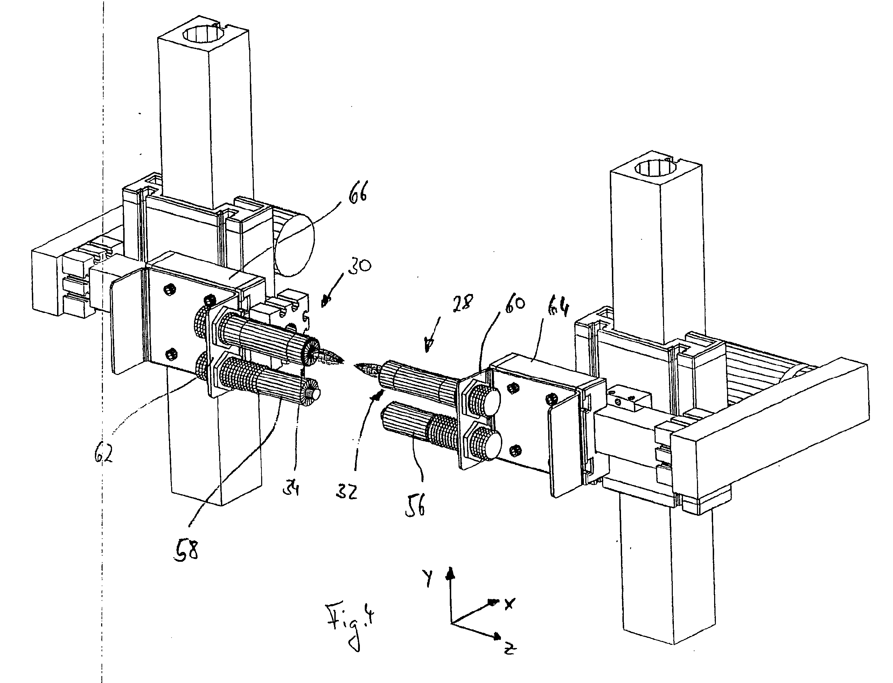

Die in der gezeigten Ausführungsform verwendeten Wärmequellen 16, 20, die in Fig. 4 vergrößert gezeigt sind, sind ein erster Gasbrenner 28 sowie ein zweiter Gasbrenner 30. Der erste und der zweite Gasbrenner 28, 30 werden mit einem Wasserstoff-Sauerstoff-Gas als Brenngas betrieben. In der gezeigten Ausführungsform weisen der erste und der zweite Gasbrenner 28, 30 jeweils drei Brennerdüsen auf, welche durch Bohrungen in einem ersten bzw. zweiten Gasleitungsendstopfen 32, 34 gebildet sind. Die Bohrungen, die jeweils einen Durchmesser von 0,5 mm aufweisen, sind derart angeordnet, daß die durch sie geformten Brennerflammen im wesentlichen fokusiert sind.

Wie zur Führung des ersten Gasbrenners 28 sowie des zweiten Gasbrenners 30 jeweils vorgesehene erste Führung 14 bzw. zweite Führung 18 weisen eine erste bzw. eine zweite Portalverfahreinrichtung 36, 38 auf, die jeweils aus einer unteren Traverse 40, 42, einer oberen Traverse 44, 46 sowie einem sich dazu senkrecht in einer Vertikalen erstreckenden Portal 48, 50 als Grundelementen bestehen. Die Portale 48, 50 sind entlang der Traversen 40, 42, 44, 46 verfahrbar. An diesen Portalverfahreinrichtungen 36, 38 sind der erste Gasbrenner 28 bzw. der zweite Gasbrenner 30 mittels eines ersten bzw. eines zweiten Verfahrschlittens 52, 54 in vertikaler Richtung verfahrbar, so daß mit dem ersten Gasbrenner 28 bzw. mit dem zweiten Gasbrenner 30 in der durch die Portalverfahreinrichtung aufgespannten Ebene XY praktisch jeder Punkt in einer Projektion auf den ebenen Materialzuschnitt 26 überfahren werden kann.

Um den Abstand der als punktförmige Wärmequelle vorgesehene Gasbrenner 28, 30 von einem zwischen ihnen liegenden Materialzuschnitt 26 und damit die Intensität des Wärmeeintrages beeinflussen zu können, sind ein erster Abstandssensor 56 sowie ein zweiter Abstandssensor 58 vorgesehen, welcher jeweils benachbart zu dem zugehörigen Gasbrenner 28 bzw. 30 an einem gemeinsamen Haltewinkel 60 bzw. 62 angeordnet sind. Die Haltewinkel 60 ,62 sind jeweils an einem Z-Schlitten 64, 66 angeordnet, welche es jeweils ermöglichen, den Abstand des jeweiligen Gasbrenners 28, 30 zur Ebene des ebenen Materialzuschnittes 26 in Z-Richtung zu verändern. Auf diese Weise kann mit dem ersten bzw. zweiten Gasbrenner 28, 30 praktisch ein Gebirge abgetastet werden, wobei jedoch die Steuerung für die Lage in der X-Y-Ebene und in der Höheririchtung Z andererseits unabhängig von einander erfolgen können.

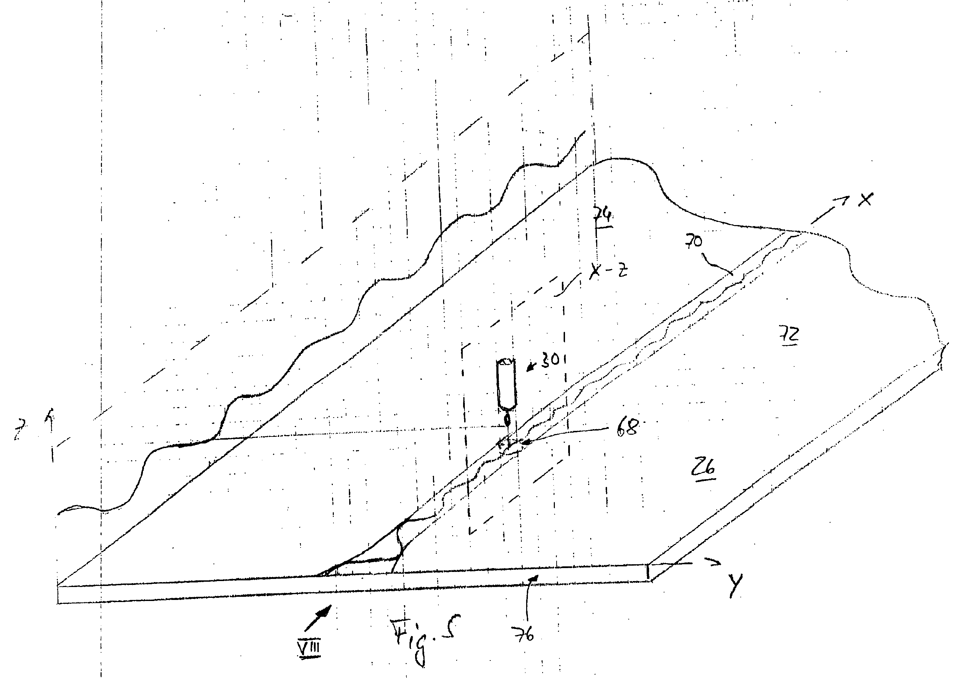

Die Fig. 5 bis 8, die auch der Erläuterung des erfindungsgemäßen Verfahrens dienen, zeigen, wie ein Gasbrenner 30 in der Ebene X-Y und in der Z-Richtung verfahrbar an einem ebenen Materialzuschnitt 26 entlang gefahren werden kann, um an einer wandernden Einwirkstelle 68, die in Fig. 5 gestrichelt dargestellt ist, quasi punktförmig Wärme einzutragen. Dabei wird durch das Verlagern des Brenners 30 in XY-Richtung in einem oder in mehreren Überläufen der Materialzuschnitt 26 in den durch durchgezogene Linien verdeutlichten Erwärmungszonen 70 derart erwärmt, daß eine Faltung der sich so ergebenden Teilabschnitte 72 und 74 des ebenen Materialzuschnittes 26 relativ zu einander zu einem dreidimensionalen Formkörper möglich ist, ohne daß die Teilabschnitte 72, 74, die der Erwärmungszone 70 benachbart sind, thermisch belastet würden. Der gezeigte Materialzuschnitt aus PMMA hat eine Materialstärke von 4,0 mm.

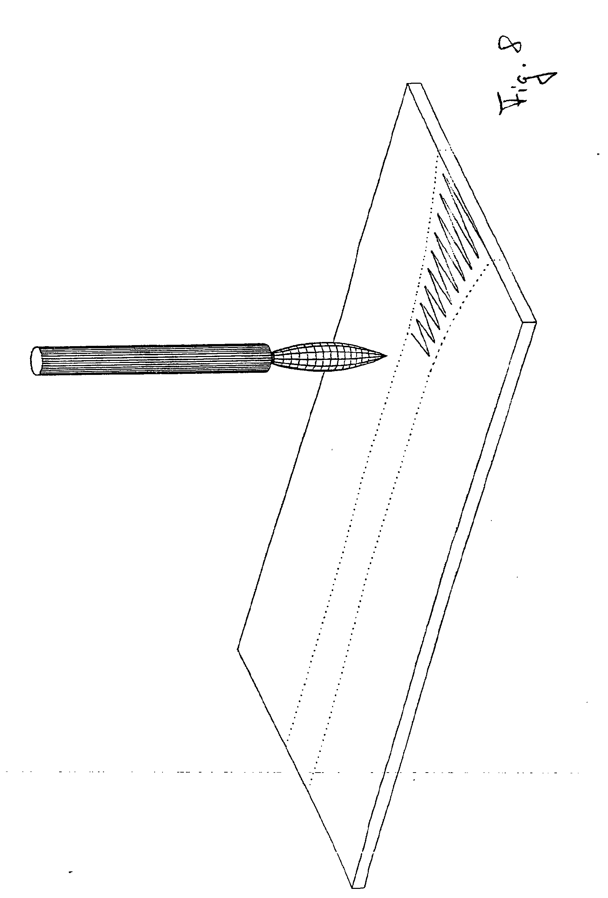

In den Fig. 5 und 8 ist zu erkennen, daß die Erwärmungszone 70 an der Kante 76 des ebenen Materialzuschnittes 26 trichterförmig erweitert ist. Dadurch wird der erhöhten Wärmeabstrahlung im Bereich der Kante 72 des ebenen Materialzuschnittes 26 Rechnung getragen, so daß über die gesamte Länge des ebenen Materialzuschnittes 26 in X-Richtung bei einer auf die zonale Erwärmung nachfolgenden Faltung gleiche Verformungsbedingungen herrschen, wodurch das Entstehen von Spannungsspitzen vermieden wird.

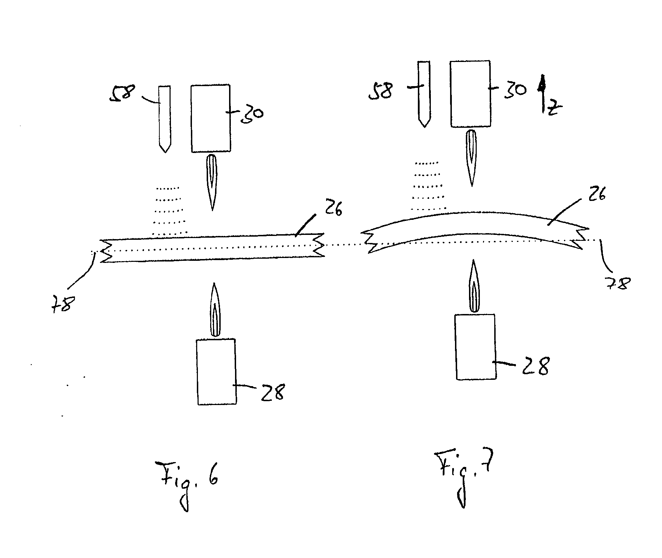

Insbesondere in Z-Richtung dünnwandige ebene Materialzuschnitte 26 unterliegen bei der zonalen Erwärmung der Gefahr von Verwerfungen, welche durch die Fig. 6 und 7 verdeutlicht sind. Um Verlagerungen des im wesentlichen ebenen Materialzuschnittes aus der in den Fig. 6 und 7 punktiert dargestellten Ebene 78 zu kompensieren, sind die Brenner 28, 30 in Z-Richtung verfahrbar, wobei der schematisch dargestellte Abstandssensor 58 für die Verfahrbewegung in Z-Richung die erfoderlichen Abstandsinformationen zur Verfügung stellt. Dadurch kann die Geometrie der Einwirkstelle 68 auch bei Verwerfungen im wesentlichen konstant gehalten werden. Fig. 5 zeigt, wie sich ein solches Verfahren in Z-Richtung in der Z-X-Ebene auswirkt.

Grundsätzlich ist eine Steuerung der Intensität des zonalen Wärmeeintrages mit der erfindungsgemäßen Vorrichtung und dem erfindungsgemäßen Verfahren durch eine Variation der Verfahrgeschwindigkeit der punktförmigen Wärmequelle 16, 20 in der X-Y-Ebene, durch einen Variation des Abstandes der punktförmigen Wärmequelle 16, 20 in Z-Richtung oder durch eine gezielte Auswahl des Verfahrweges möglich. Diese drei genannten Einflußmöglichkeiten beruhen im wesentlichen auf der durch eine bevorzugte Ausführungsform der Erfindung bereit gestellte Möglichkeit der entkoppelten Steuerung der punktförmigen Wärmequelle 16, 20 in der X-Y-Ebene einerseits und in Z-Richtung andererseits. Weitere Einflußmöglicheiten auf die Intensität des Wärmeeintrages stehen bei einer Verwendung eines Gasbrenners durch die Auswahl und Gestaltung der Brennerdüsen zur Verfügung.

Die in den Figuren 1 bis 9 erläuterte bevorzugte Ausführungsform einer erfindungsgemäßen Zonenheizvorrichtung ist - wie bereits erläutert - derart ausgebildet, dass die zunächst ebenen Materialzuschnitte, die nach der erfindungsgemäßen Erwärmung zu dreidimensionalen Formkörpern verformt werden sollen, im wesentlichen senkrecht zur Horizontalen gehalten werden. Mit dieser senkrechten Halterung kann es zu einer ungeplant ungleichförmigen Erwärmung der zu erwärmenden Zonen (Biegekanäle) kommen, wobei gemäß einer weiter bevorzugten Ausführungsform der Erfindung dieser Nachteil dadurch behoben wird, dass eine das Problem aufsteigender Wärme kompensierende Brennerführung vorgesehen ist. Eine aufsteigende Wärme kompensierende Brennerführung lässt sich insbesondere mit einer Wärmebildkamera realisieren, deren Wärmebilder vorzugsweise digitalisiert und in Steuerungsbefehle für die erste bzw. zweite Quellenführung umgewandelt werden.

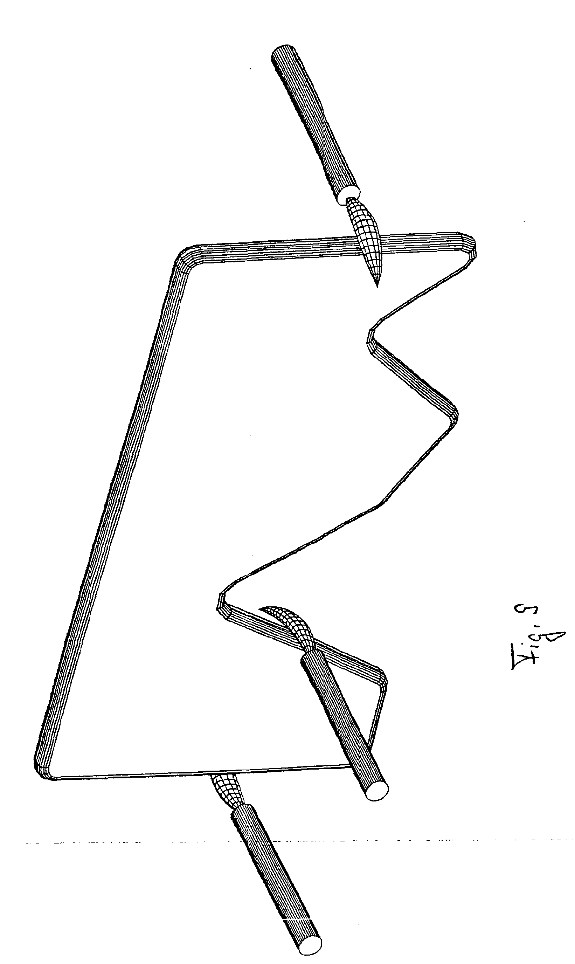

Mit der erfindungsgemäßen Vorrichtung ist es nicht nur möglich, ebene Materialzuschnitte zu einem nachfolgenden Falten zonal zu erwärmen, sondern es ist auch möglich, komplizierte Kanten mit einer Brennerflamme zu polieren, wie dies in Fig. 9 dargestellt ist. Dabei ist die Brennerflamme nicht senkrecht auf die Kante gerichtet, sondern quer zum Verlauf der Kante angeordnet, wodurch mit dieser Verfahrensvariante auch an Stellen eine Flammpolierung erfolgen kann, an denen eine stirnseitig auf die Kante gerichtete Brennerflamme aus Geometriegründen durch störende Abschnitte des ebenen Materialzuschnittes nicht zum Einsatz gebracht werden kann.

## Patentansprüche

1. Zonenheizvorrichtung zum zonalen Wärmeeintrag in einen im wesentlichen ebenen Materialzuschnitt (26) aus einem thermoplastischem Material bei der Fertigung dreidimensionaler Formkörper, mit einer ersten, im wesentlichen punktförmigen Wärmequelle (16), deren Einwirkstelle (68) mittels einer ersten Quellenführung verlagerbar ist, wobei die erste Quellenführung derart ausgebildet ist, dass mit dieser die erste Wärmequelle in einer ersten, zu der Wirkrichtung der Wärmequelle im wesentlichen senkrecht angeordneten Ebene in zueinander quer verlaufenden Richtungen verfahrbar ist, wobei als erste punktförmige Wärmequelle mindestens ein erster Gasbrenner (28) vorgesehen ist, **dadurch gekennzeichnet, dass** der erste Gasbrenner eine auswechselbar angeordnete Brennerdüse aufweist und die Brennerdüse zwei oder mehr Gemisch-Austrittsöffnungen aufweist und der erste Gasbrenner mit einem Wasserstoff-Sauerstoff-Gasgemisch betreibbar ist, und dass ein Wasserstoff-Sauerstoff-Gas-Generator vorgesehen ist, der durch Elektrolyse ein Brenngasgemisch erzeugt.

2. Zonenheizvorrichtung nach Anspruch 1, **dadurch gekennzeichnet dass** eine zweite, im wesentlichen punktförmige Wärmequelle (20) vorgesehen, deren Einwirkstelle verlagerbar ist.

3. Zonenheizvorrichtung nach Anspruch 1 oder 2, **dadurch gekennzeichnet, dass** die erste und oder die zweite Wärmequelle (16, 18) eine von der Einwirkstelle entkoppelte Steuerung der Intensität des Wärmeeintrags ermöglichen.

4. Zonenheizvorrichtung nach einem der Ansprüche 1 bis 3, **dadurch gekennzeichnet, dass** als zweite punktuelle Wärmequelle ein zweiter Gasbrenner (30) vorgesehen ist.

5. Zonenheizvorrichtung nach Anspruch 4, **dadurch gekennzeichnet, dass** eine Brennerdüse des zweiten Gasbrenners auswechselbar angeordnet ist.

6. Zonenheizvorrichtung nach einem der Ansprüche 1 bis 5, **dadurch gekennzeichnet, dass** die Düsenachse der Brennerdüse des ersten und/oder des zweiten Gasbrenners verstellbar ist.

7. Zonenheizvorrichtung nach einem der Ansprüche 1 bis 6, **dadurch gekennzeichnet, dass** die Brennerdüsen jeweils mindestens eine Gasaustrittskanüle aufweisen.

8. Zonenheizvorrichtung nach Anspruch 7, **dadurch gekennzeichnet, dass** die Gasaustrittskanülen aus einem durch Biegen ausrichtbaren metallischen Rohrmaterial bestehen.

9. Zonenheizvorrichtung nach einem der Ansprüche 1 bis 8, **dadurch gekennzeichnet, dass** die Brennerdüsen durch Bohrungen in einen Gasleitungsendstopfen (32, 34) gebildet sind.

10. Zonenheizvorrichtung nach Anspruch 4 oder nach einem der Ansprüche 5 bis 9 in dessen Rückbezug auf Anspruch 4, **dadurch gekennzeichnet, dass** der zweite Gasbrenner mit einem Wasserstoff-Sauerstoff-Gasgemisch betreibbar ist.

11. Zonenheizvorrichtung nach Anspruch 2 oder nach einem der Ansprüche 3 bis 10 in dessen Rückbezug auf Anspruch 2, **dadurch gekennzeichnet, dass** eine zweite Quellenführung (18) vorgesehen ist, mit welcher die zweite Wärmequelle (20) in einer zweiten, zu ihrer Wirkrichtung im wesentlichen senkrecht angeordneten Ebene verfahrbar ist.

12. Zonenheizvorrichtung nach einem der Ansprüche 1 bis 11, **dadurch gekennzeichnet, dass** eine Materialzuschnitt-Haltvorrichtung (22) vorgesehen ist, mit welcher ebene Materialzuschnitte (26) in einer Halteebene sicher positionierbar sind, welche mindestens zu der ersten und/oder der zweiten Ebene der Quellenführung im wesentlichen parallel angeordnet ist.

13. Zonenheizvorrichtung nach Anspruch 12, **dadurch gekennzeichnet, dass** die Halteebene zur Horizontalen im wesentlichen senkrecht ausgerichtet ist.

14. Zonenheizvorrichtung nach einem der Ansprüche 11 bis 13, **dadurch gekennzeichnet, dass** die erste Ebene der ersten Quellenführung (14) und die zweite Ebene der zweiten Quellenführung (16) im wesentlichen parallel angeordnet sind.

15. Zonenheizvorrichtung nach einem der Ansprüche 11 bis 14, **dadurch gekennzeichnet, dass** die erste und/oder die zweite Quellenführung eine Portal-Verfahreinrichtung (36, 38) aufweisen.

16. Zonenheizvorrichtung nach einem der Ansprüche 1 bis 15, **dadurch gekennzeichnet, dass** unmittelbar benachbart zu der ersten bzw. zu der zweiten Wärmequelle (16, 20) jeweils ein Abstandssensor (56, 58) angeordnet ist, mit welchem der Abstand der ersten bzw. der zweiten Wärmequelle (16, 20) relativ zu dem Materialzuschnitt (26) ermittelbar ist.

17. Zonenheizvorrichtung nach einem der Ansprüche 1 bis 16, **dadurch gekennzeichnet, dass** die erste und/oder die zweite Wärmequelle senkrecht zu dem ebenen Materialzuschnitt verfahrbar ist.

18. Zonenheizvorrichtung nach einem der Ansprüche 1 bis 17, **dadurch gekennzeichnet, dass** ein Temperatursensor vorgesehen ist, mit welchem die Temperatur in erwärmten Zonen berührungslos ermittelbar ist.

19. Zonenheizvorrichtung nach Anspruch 9 oder nach einem der Ansprüche 10 bis 18 in dessen Rückbezug auf Anspruch 9, **dadurch gekennzeichnet, dass** die Wärmequellen (16, 20) derart ausgestaltet sind, dass die Wegkoordinaten der Quellenführungen (14, 18) aus den Koordinaten der gewünschten Einwirkstelle (68) auf dem ebenen Materialzuschnitt ableitbar sind.

20. Zonenheizvorrichtung nach einem der Ansprüche 11 bis 19, **dadurch gekennzeichnet, dass** eine von der Abstandsteuerung unabhängige Wegsteuerung möglich ist.

21. Zonenheizvorrichtung nach einem der Ansprüche 1 bis 20, **dadurch gekennzeichnet, dass** eine Wärmebildkamera sowie eine die Bilder der Wärmebildkamera verarbeitende Steuerung vorgesehen sind.

22. Verfahren zum zonalen Wärmeeintrag in einen im wesentlichen ebenen Materialzuschnitt aus einem thermoplastischen Material, wobei zum Wärmeeintrag eine Verlagerung der Einwirkstelle einer im wesentlichen punktförmigen Wärmequelle in einer ersten, zu der Wirkrichtung der Wärmequelle im wesentlichen senkrecht angeordneten Ebene in zueinander quer verlaufenden Richtungen erfolgt, wobei als punktförmige Wärmequelle mindestens ein Gasbrenner (28) eingesetzt wird, **dadurch gekennzeichnet, dass**
eine Brennerdüse des Gasbrenners (28) auswechselbar angeordnet wird und die Brennerdüse zwei oder mehr Gemisch-Austrittsöffnungen aufweist und der Gasbrenner (28) mit einem Wasserstoff-Sauerstoff-Gasgemisch betreibbar ist, wobei ein Wasserstoff-Sauerstoff-Gasgenerator vorgesehen wird, der durch Elektrolyse ein Brenngasgemisch erzeugt.

23. Verfahren insbesondere nach Anspruch 22, **dadurch gekennzeichnet, dass** die Wärmeerzeugung durch Verbrennen eines Brenngas-Sauerstoff-Gasgemisches erfolgt.

24. Verfahren nach Anspruch 22 oder 23, **dadurch gekennzeichnet, dass** die Wärmeerzeugung durch Verbrennen eines Wasserstoff-Sauerstoff-Gasgemisches erfolgt.

25. Verfahren nach einem der Ansprüche 22 bis 24, **dadurch gekennzeichnet, dass** der Wärmeeintrag von beiden Seiten des im wesentlichen ebenen Materialzuschnittes erfolgt.

26. Verfahren nach einem der Ansprüche 22 bis 25, **dadurch gekennzeichnet, dass** der Wärmeeintrag im Bereich der Kannten des ebenen Materialzuschnittes durch mindestens einen ersten, an der Kannte entlang streichenden heißen Gasstrahl erfolgt, um Kannten zu runden oder Bearbeitungsmarkierungen einzuebnen.

27. Verfahren nach einem der Ansprüche 20 bis 24, **dadurch gekennzeichnet, dass** mittels einer Wärmebildkamera Wärmebilder erzeugt werden, anhand derer eine Steuerung Steuerbefehle für die Brennerführung erzeugt.

28. Verfahren nach Anspruch 25, **dadurch gekennzeichnet, dass** die Wärmebilder während des Wärmeeintrages erzeugt werden und die Steuerbefehle in Echtzeit während des Wärmeeintrages erzeugt und umgesetzt werden.

29. Verfahren nach Anspruch 25 oder 26, **dadurch gekennzeichnet, dass** die Steuerbefehle einen Brennerversatz entgegen der Richtung des Wärmeaufstieges bewirken.

## Claims

1. Zone heating device for zonal heat input into a substantially flat material blank (26) of a thermoplastic material in the manufacture of three-dimensional molded bodies, including a first, substantially punctual heat source (16), the impact location (68) of which is displaceable by means of a first source guide, wherein the first source guide is formed such that the first heat source is movable by it in a first plane disposed substantially perpendicularly to the effective direction of the heat source in directions extending transversely to each other, wherein at least a first gas burner (28) is provided as the first punctual heat source, **characterized in that** the first gas burner has an exchangeably arranged burner nozzle and the burner nozzle has two or more mixture exit openings, and the first gas burner is operable with a hydrogen-oxygen gas mixture, and that a hydrogen-oxygen gas generator is provided, which generates a combustion gas mixture by electrolysis.

2. Zone heating device according to claim 1, **characterized in that** a second, substantially punctual heat source (20) is provided, the impact location of which is displaceable.

3. Zone heating device according to claim 1 or 2, **characterized in that** the first and/or the second heat source (16, 18) allow control of the intensity of the heat input decoupled from the impact location.

4. Zone heating device according to any one of claims 1 to 3, **characterized in that** a second gas burner (30) is provided as the second punctual heat source.

5. Zone heating device according to claim 4, **characterized in that** a burner nozzle of the second gas burner is exchangeably arranged.

6. Zone heating device according to any one of claims 1 to 5, **characterized in that** the nozzle axis of the burner nozzle of the first and/or the second gas burner is adjustable.

7. Zone heating device according to any one of claims 1 to 6, **characterized in that** the burner nozzles each have at least one gas exit cannula.

8. Zone heating device according to claim 7, **characterized in that** the gas exit cannulas are composed of a metallic pipe material capable of being oriented by bending.

9. Zone heating device according to any one of claims 1 to 8, **characterized in that** the burner nozzles are formed by bores in a gas line end plug (32, 34).

10. Zone heating device according to claim 4 or according to any one of claims 5 to 9 in its relation to claim 4, **characterized in that** the second gas burner is operable with a hydrogen-oxygen gas mixture.

11. Zone heating device according to claim 2 or according to any one of claims 3 to 10 in its relation to claim 2, **characterized in that** a second source guide (18) is provided, by which the second heat source (20) is movable in a second plane substantially perpendicularly disposed to its effective direction.

12. Zone heating device according to any one of claims 1 to 11, **characterized in that** a material blank retaining device (22) is provided, by which flat material blanks (26) are securely positionable in a retaining plane, which is disposed substantially parallel at least to the first and/or the second plane of the source guide.

13. Zone heating device according to claim 12, **characterized in that** the retaining plane is oriented substantially perpendicularly to the horizontal.

14. Zone heating device according to any one of claims 11 to 13, **characterized in that** the first plane of the first source guide (14) and the second plane of the second source guide (16) are substantially parallel disposed.

15. Zone heating device according to any one of claims 11 to 14, **characterized in that** the first and/or the second source guide have a portal moving means (36, 38).

16. Zone heating device according to any one of claims 1 to 15, **characterized in that** a distance sensor (56, 58) is respectively disposed immediately adjacent to the first and to the second heat source (16, 20), respectively, by which the distance of the first and the second heat source (16, 20) relative to the material blank (26) can be determined, respectively.

17. Zone heating device according to any one of claims 1 to 16, **characterized in that** the first and/or the second heat source is movable perpendicularly to the flat material blank.

18. Zone heating device according to any one of claims 1 to 17, **characterized in that** a temperature sensor is provided, by which the temperature in heated zones can be determined in non-contacting manner.

19. Zone heating device according to claim 9 or according to any one of claims 10 to 18 in its relation to claim 9, **characterized in that** the heat sources (16, 20) are configured such that the path coordinates of the source guides (14, 18) can be derived from the coordinates of the desired impact location (68) on the flat material blank.

20. Zone heating device according to any one of claims 11 to 19, **characterized in that** a path control independent of the distance control is possible.

21. Zone heating device according to any one of claims 1 to 20, **characterized in that** a thermal imaging camera as well as a control processing the images of the thermal imaging camera are provided.

22. Method for zonal heat input into a substantially flat material blank of a thermoplastic material, wherein displacement of the impact location of a substantially punctual heat source in a first plane disposed substantially perpendicularly to the effective direction of the heat source in directions extending transversely to each other is effected for heat input, wherein at least one gas burner (28) is employed as the punctual heat source, **characterized in that**
a burner nozzle of the gas burner (28) is exchangeably arranged and the burner nozzle has two or more mixture exit openings, and the gas burner (28) is operable with a hydrogen-oxygen gas mixture, wherein a hydrogen-oxygen gas generator is provided, which generates a burner gas mixture by electrolysis.

23. Method in particular according to claim 22, **characterized in that** the heat generation is effected by combusting a combustion gas-oxygen gas mixture.

24. Method according to claim 22 or 23, **characterized in that** the heat generation is effected by combusting a hydrogen-oxygen gas mixture.

25. Method according to any one of claims 22 to 24, **characterized in that** the heat input is effected from both sides of the substantially flat material blank.

26. Method according to any one of claims 22 to 25, **characterized in that** the heat input is effected in the region of the edges of the flat material blank by at least a first hot gas jet sweeping along the edge in order to round edges or flatten processing marks.

27. Method according to any one of claims 20 to 24, **characterized in that** thermal images are generated by means of a thermal imaging camera, based on which a control generates control commands for the burner guide.

28. Method according to claim 25, **characterized in that** the thermal images are generated during the heat input and the control commands are generated and implemented in real time during the heat input.

29. Method according to claim 25 or 26, **characterized in that** the control commands effect a burner offset opposite to the direction of the heat rise.

## Revendications

1. Appareil de chauffage par zone, destiné à l'apport de chaleur par zone dans une découpe de matériau (26) essentiellement plane, à partir d'un matériau thermoplastique, lors de la fabrication de corps moulés tridimensionnels, avec une première source de chaleur (16) essentiellement ponctuelle, dont le point de déclenchement (68) peut être déplacé au moyen d'un premier guidage de source, moyennant quoi le premier guidage de source est constitué de telle sorte, qu'avec celui-ci, la première source de chaleur peut être déplacée dans un premier plan, agencé essentiellement verticalement par rapport à la direction effective de la source de chaleur, dans des directions évoluant transversalement l'une par rapport à l'autre, moyennant quoi il est prévu au moins un premier brûleur à gaz (28), en tant que première source de chaleur ponctuelle, **caractérisé en ce que** le premier brûleur à gaz présente une buse de brûleur, agencée de manière échangeable et que la buse de brûleur présente deux orifices de sortie de mélange ou plus et que le premier brûleur à gaz peut être exploité avec un mélange gazeux hydrogène - oxygène et qu'un générateur de gaz hydrogène - oxygène est prévu, qui produit un mélange gazeux combustible par électrolyse.

2. Appareil de chauffage par zone selon la revendication 1, **caractérisé en ce qu'**une seconde source de chaleur (20), essentiellement ponctuelle, est prévue, dont le point de déclenchement peut être déplacé.

3. Appareil de chauffage par zone selon la revendication 1 ou 2, **caractérisé en ce que** la première et / ou la seconde source de chaleur (16, 18) permettent une régulation de l'intensité de l'apport de chaleur, découplée du point de déclenchement.

4. Appareil de chauffage par zone selon l'une des revendications 1 à 3, **caractérisé en ce qu'**un second brûleur à gaz (30) est prévu en tant que seconde source de chaleur ponctuelle.

5. Appareil de chauffage par zone selon la revendication 4, **caractérisé en ce qu'**une buse de brûleur du second brûleur à gaz est agencée de manière échangeable.

6. Appareil de chauffage par zone selon l'une des revendications 1 à 5, **caractérisé en ce que** l'axe de la buse du brûleur du premier et / ou du second brûleur à gaz est réglable.

7. Appareil de chauffage par zone selon l'une des revendications 1 à 6, **caractérisé en ce que** les buses de brûleur présentent, respectivement, au moins une canule de sortie de gaz.

8. Appareil de chauffage par zone selon la revendication 7, **caractérisé en ce que** les canules de sortie de gaz se composent d'un matériau tubulaire métallique, pouvant être aligné par cintrage.

9. Appareil de chauffage par zone selon l'une des revendications 1 à 8, **caractérisé en ce que** les buses de brûleur sont formées par le biais de trous dans un bouchon d'extrémité de canalisation de gaz (32, 34).

10. Appareil de chauffage par zone selon la revendication 4 ou selon l'une des revendications 5 à 9 dans leur référence rétrospective à la revendication 4, **caractérisé en ce que** le second brûleur à gaz peut être exploité avec un mélange gazeux hydrogène - oxygène.

11. Appareil de chauffage par zone selon la revendication 2 ou selon l'une des revendications 3 à 10 dans leur référence rétrospective à la revendication 2, **caractérisé en ce qu'**un second guidage de source (18) est prévu, avec lequel la seconde source de chaleur (20) peut être déplacée dans un second plan, agencé essentiellement verticalement par rapport à sa direction effective.

12. Appareil de chauffage par zone selon l'une des revendications 1 à 11, **caractérisé en ce qu'**un appareil de retenue de découpe de matériau (22) est prévu, avec lequel des découpes de matériau planes (26) peuvent être positionnées de manière sûre dans un plan de retenue, lequel est agencé essentiellement parallèlement au moins par rapport au premier et / ou au second plan du guidage de source.

13. Appareil de chauffage par zone selon la revendication 12, **caractérisé en ce que** le plan de retenue est orienté essentiellement verticalement par rapport à l'horizontale.

14. Appareil de chauffage par zone selon l'une des revendications 11 à 13, **caractérisé en ce que** le premier plan du premier guidage de source (14) et le second plan du second guidage de source (16) sont agencés essentiellement parallèlement.

15. Appareil de chauffage par zone selon l'une des revendications 11 à 14, **caractérisé en ce que** le premier et / ou le second guidage de source présentent un dispositif d'avance de portail (36, 38).

16. Appareil de chauffage par zone selon l'une des revendications 1 à 15, **caractérisé en ce qu'**un détecteur d'espacement (56, 58) est agencé, respectivement, directement à côté de la première ou de la seconde source de chaleur (16, 20), avec lequel l'espacement de la première ou de la seconde source de chaleur (16, 20) peut être déterminé par rapport à la découpe de matériau (26).

17. Appareil de chauffage par zone selon l'une des revendications 1 à 16, **caractérisé en ce que** la première et / ou la seconde source de chaleur peut être déplacée verticalement par rapport à la découpe plane de matériau.

18. Appareil de chauffage par zone selon l'une des revendications 1 à 17, **caractérisé en ce qu'**un capteur de température est prévu, avec lequel la température peut être déterminée sans contact dans des zones chauffées.

19. Appareil de chauffage par zone selon la revendication 9 ou selon l'une des revendications 10 à 18 dans leur référence rétrospective à la revendication 9, **caractérisé en ce que** les sources de chaleur (16, 20) sont aménagées, de telle sorte que les coordonnées de la trajectoire des guidages de source (14, 18) peuvent être déduites des coordonnées du point de déclenchement (68) désiré sur la découpe plane de matériau.

20. Appareil de chauffage par zone selon l'une des revendications 11 à 19, **caractérisé en ce qu'**une régulation de la trajectoire, indépendante de la régulation de l'espacement, est possible.

21. Appareil de chauffage par zone selon l'une des revendications 1 à 20, **caractérisé en ce qu'**une caméra thermique, ainsi qu'une commande, qui traite les images de la caméra thermique, sont prévues.

22. Procédé, destiné à l'apport de chaleur par zone dans une découpe de matériau essentiellement plane, à partir d'un matériau thermoplastique, moyennant quoi, pour l'apport de chaleur, il se produit un déplacement du point de déclenchement d'une source de chaleur essentiellement ponctuelle dans un premier plan, agencé essentiellement verticalement par rapport au sens de déclenchement de la source de chaleur, dans des directions, évoluant transversalement l'une par rapport à l'autre, moyennant quoi au moins un brûleur à gaz (28) est mis en oeuvre en tant que source de chaleur ponctuelle, **caractérisé en ce qu'**une buse du brûleur à gaz (28) est agencée de manière échangeable et que la buse de brûleur présente deux orifices de sortie de mélange ou plus et que le brûleur à gaz (28) peut être exploité avec un mélange gazeux hydrogène - oxygène, moyennant quoi un générateur de gaz hydrogène - oxygène est prévu, qui produit un mélange gazeux combustible par électrolyse.

23. Procédé, en particulier selon la revendication 22, **caractérisé en ce que** la production de chaleur se produit par combustion d'un mélange gazeux gaz combustible - oxygène.

24. Procédé selon la revendication 22 ou 23, **caractérisé en ce que** la production de chaleur se produit par combustion d'un mélange gazeux hydrogène - oxygène.

25. Procédé selon l'une des revendications 22 à 24, **caractérisé en ce que** l'apport de chaleur se produit des deux côtés de la découpe, essentiellement plane, de matériau.

26. Procédé selon l'une des revendications 22 à 25, **caractérisé en ce que** l'apport de chaleur se produit dans le secteur des bords de la découpe plane de matériau, par le biais d'au moins un premier jet de gaz chaud, s'étendant le long du bord, pour arrondir les bords ou égaliser les marquages d'usinage.

27. Procédé selon l'une des revendications 20 à 24, **caractérisé en ce que** des images thermiques sont produites au moyen d'une caméra thermique, à l'aide de laquelle une commande produit des instructions de contrôle pour le guidage du brûleur.

28. Procédé selon la revendication 25, **caractérisé en ce que** les images thermiques sont produites pendant l'apport de chaleur et que les instructions de contrôle sont produites et transformées en temps réel pendant l'apport de chaleur.

29. Procédé selon la revendication 25 ou 26, **caractérisé en ce que** les instructions de contrôle provoquent un décalage du brûleur vis-à-vis du sens de montée de la chaleur.
